# EUROPEAN PATENT APPLICATION

(11) **EP 1 607 530 A2**
(43) Date of publication of application: **21.12.2005**
(21) Application number: 05104684.5
(22) Date of filing: 31.05.2005
(51) Int. Cl.: E03D 1/012

(54) **Fastening device for fitting a control plate of a sanitary fixture to a supporting frame**

(30) Priority: 31.05.2004 IT MI20041103
(71) Applicant: Oliveira & Irmao S.A., 3800 Aveiro (PT)
(72) Inventor: MOURA DE OLIVEIRA, Antonio Manuel, 3800, AVEIRO (PT)
(74) Representative: Jorio, Paolo

(57) **Abstract**

A fastening device (1), for fitting a control plate (2) of a sanitary fixture to a supporting frame (3), has a retaining member (22) fitted movably to the plate (2) to selectively engage/release a stop member (23) fixed to the frame (3), and so prevent/permit movement of the plate (2) with respect to the frame (3) in a predetermined slide direction (D); the retaining member (22) is defined by a rod (26) housed inside a seat (21) on the plate (2) to rotate about an axis (A) of rotation, and by an eccentric appendix (27) extending outside the seat (21) to engage the stop member (23); the retaining member (22) rotates to selectively assume a lock position, in which the appendix (27) rests axially against the stop member (23) to prevent the plate from sliding with respect to the frame, and a release position, in which the appendix (27) does not engage the stop member (23), thus allowing the plate to slide with respect to the frame.

## Description

The present invention relates to a fastening device for fitting a control plate of a sanitary fixture to a supporting frame.

As is known, in walled-in or recessed sanitary fixture flush tanks, the flush control devices are wall-mounted with the actuating members extending through an inspection opening in the wall; the inspection opening is closed by a plate (on which the user control buttons are mounted) fitted to a frame fixed to the wall; and the plate is fixed removably to the frame by a fastening device, which can be manoeuvred (only using tools, to prevent tampering) to secure or release the plate to or from the frame.

Known fastening devices, such as the one illustrated in EP-A-0866183, have various drawbacks, and in particular are fairly complicated to produce and assemble and/or are awkward to use.

It is therefore an object of the present invention to provide a fastening device for fitting a control plate of a sanitary fixture to a supporting frame, designed to eliminate the drawbacks of known solutions, and which, in particular, is extremely easy to produce, assemble and use, while at the same time being fully efficient and reliable.

According to the present invention, there is provided a fastening device for fitting a control plate of a sanitary fixture to a supporting frame, comprising a movable retaining member for selectively engaging/releasing a stop member to prevent/permit movement of the plate with respect to the frame in a predetermined slide direction; the device being characterized in that the retaining member comprises a rod housed inside a seat to rotate about an axis of rotation; and an eccentric appendix carried by the rod, outside the seat, to selectively engage the stop member located outside the seat; the retaining member rotating about said axis to selectively assume a lock position, in which the appendix rests axially against the stop member to prevent the plate from sliding with respect to the frame in said direction, and a release position, in which the appendix does not engage the stop member, thus allowing the plate to slide with respect to the frame in said direction.

The fastening device according to the invention is extremely straightforward and, therefore, cheap to produce and assemble, while at the same time being fully efficient and reliable.

A non-limiting embodiment of the present invention will be described by way of example with reference to the accompanying drawings, in which:
Figure 1 shows a schematic exploded view in perspective of a fastening device in accordance with the invention;
Figure 2 shows a schematic, partly sectioned view of a detail of the Figure 1 device as assembled;
Figure 3 shows a schematic longitudinal section of the Figure 2 detail.

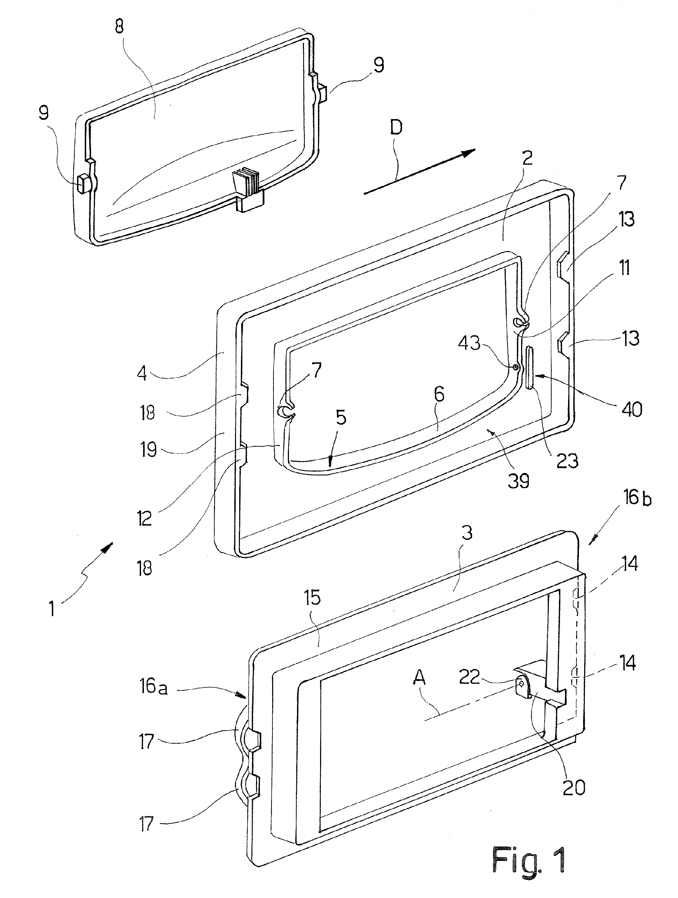

Number 1 in Figure 1 indicates as a whole a fastening device for fitting a control plate 2 of a sanitary fixture to a supporting frame 3. In the example shown, plate 2 is a flush control plate of a walled-in or recessed flush tank of a lavatory or urinal; and frame 3 is fixed in known manner to a wall, about an inspection opening housing, as is known, the actuating members of the flush tank flush valve.

Plate 2 comprises a peripheral edge 4 perpendicular to plate 2; a through opening 5 bounded by a raised peripheral collar 6 facing edge 4; and supports 7 for a control button 8 fitted movably through opening 5. Button 8 is a rocking type, and is hinged to plate 2 by two opposite pins 9 inserted for rotation inside supports 7; supports 7 are formed in respective lateral portions 11, 12 of collar 6 facing each other at opposite lateral ends of opening 5; and button 8 cooperates, in use, with known actuating members (not shown) to activate the flush valve in opposition to a return spring (not shown).

Plate 2 comprises teeth 13 projecting from edge 4 to engage respective seats 14 formed in a peripheral border 15 of frame 3. More specifically, teeth 13 are inserted inside respective seats 14 in a predetermined slide direction D and, in particular, with a lateral movement (from left to right in Figure 1).

A first lateral end 16a of border 15 is fitted with elastic members 17, which engage catches 18 on edge 4 of the plate, and cooperate, parallel to direction D, with a portion 19 of edge 4 to permit insertion of teeth 13 inside respective seats 14; and a second lateral end 16b, opposite first lateral end 16a, of border 15 is fitted with a projecting support 20.

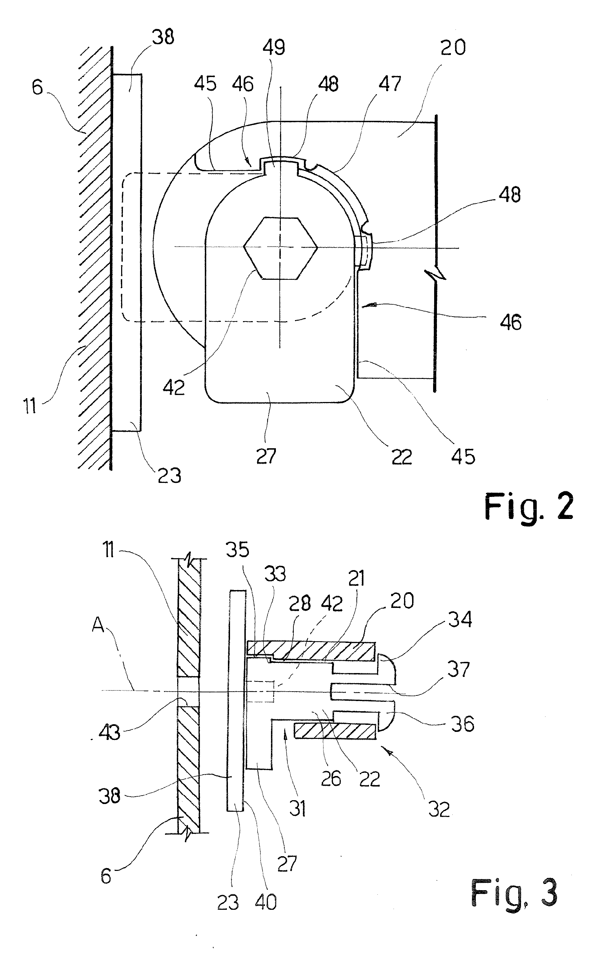

With reference also to Figures 2 and 3, support 20 has a substantially cylindrical inner seat 21 housing in rotary manner a retaining member 22, which is movable to selectively engage/release a stop member 23 on plate 2 to prevent/permit movement of plate 2 with respect to frame 3 in direction D and so secure or release plate 2 to or from frame 3.

Retaining member 22 has a substantially L-shaped longitudinal section, and comprises a substantially cylindrical rod 26 extending along an axis A parallel to direction D; and an eccentric appendix 27 projecting radially from an axial end 28 of rod 26.

Rod 26 rotates, inside seat 21, about axis A, which defines an axis of rotation of retaining member 22; seat 21 is bounded by a cylindrical lateral wall, and has two open, axially opposite ends 31, 32; rod 26 is housed through seat 21, and is secured axially inside seat 21 by opposite shoulders 33, 34 located at ends 31, 32, outside seat 21, and defined respectively, in the example shown, by a collar 35 and transverse tabs 36; and, to insert rod 26 inside seat 21, rod 26 has a longitudinal slit 37 enabling the two portions of rod 26 separated by slit 37 to flex towards each other.

Appendix 27 is defined by a plate, which projects radially from axial end 28 of rod 26, entirely on one side of a central plane of rod 26 and outside seat 21, to selectively engage stop member 23.

Stop member 23 is located outside seat 21, and comprises a projection 38 projecting perpendicularly from a rear face 39 of plate 2, perpendicularly to direction D and close to lateral portion 11 of collar 6. Projection 38 has a side 40 facing support 20 and therefore on the opposite side to opening 5.

Appendix 27 has a manoeuvring hole 42, e.g. a hexagonal dead hole, extending along axis A and in which is insertable a tool, e.g. an Allen wrench, by which to manoeuvre retaining member 22; manoeuvring hole 42 is aligned with an access hole 43 for insertion of the tool and formed through lateral portion 11 of collar 6; and button 8 is movable into a rest position, in which button 8 is located inside opening 5, substantially coplanar with plate 2, and conceals access hole 43, and a work position, in which button 8 is tilted through opening 5 with respect to plate 2, and access hole 43 is exposed and accessible.

Retaining member 22 rotates about axis A to selectively assume a lock position, shown by the dash line in Figure 2, and a release position, shown by the continuous line in Figures 2 and 3.

In the lock position, appendix 27 rests axially, parallel to axis A and to direction D, on side 40 of stop member 23 to prevent plate 2 from sliding with respect to frame 3 in direction D. Retaining member 22 therefore secures plate 2 to frame 3, by preventing plate 2 from moving in direction D to release teeth 13 from seats 14.

Conversely, in the release position, appendix 27 does not engage stop member 23, thus allowing plate 2 to slide with respect to frame 3 in direction D to release teeth 13 from seats 14 and so permit removal of plate 2 from frame 3.

Retaining member 22 is rotated 90° into the lock position or release position. Rotation of retaining member 22 is limited by two stops 45 projecting axially from end 31 of seat 21 and so located as to cooperate with respective opposite sides of appendix 27 to limit rotation of appendix 27, and therefore of retaining member 22, to two perpendicular positions.

Stops 45 are located at respective opposite ends 46 of a curved guide 47 substantially coaxial with seat 21; guide 47 comprises two retaining seats 48 at ends 46; and retaining member 22 has a radial projection 49, which rotates integrally with retaining member 22 inside guide 47, and clicks inside one or the other of retaining seats 48 when retaining member 22 assumes the lock position or the release position respectively. Projection 49 projects radially from an outer lateral surface of rod 26, and is diametrically opposite appendix 27.

In actual use, once frame 3 is fixed (in known manner) to the wall, about the inspection opening, plate 2 is fitted to frame 3 in direction D by forcing elastic members 17. Since retaining member 22 is in the release position, plate 2 slides in direction D, without appendix 27 encountering stop 23, so that teeth 13 engage seats 14.

Once plate 2 is fitted to frame 3, button 8 is moved into the work position to expose access hole 43; the tool is inserted through access hole 43 into manoeuvring hole 42, and retaining member 22 is rotated 90° into the lock position. Appendix 27 now rests against side 40 of stop member 23, and prevents plate 2 from moving with respective to frame 3 in direction D, thus preventing release of teeth 13 from seats 14 to remove plate 2.

To remove plate 2, retaining member 22 is simply moved into the release position, using the tool, and plate 2 is simply moved with respect to frame 3 in direction D to release teeth 13 from seats 14.

## Claims

1. A fastening device (1) for fitting a control plate (2) of a sanitary fixture to a supporting frame (3), comprising a movable retaining member (22) for selectively engaging/releasing a stop member (23) to prevent/permit movement of the control plate (2) with respect to the frame (3) in a predetermined slide direction (D); the device being **characterized in that** the retaining member (22) comprises a rod (26) housed inside a seat (21) to rotate about an axis (A) of rotation; and an eccentric appendix (27) carried by the rod (26), outside the seat (21), to selectively engage the stop member (23) located outside the seat (21); the retaining member (22) rotating about said axis (A) to selectively assume a lock position, in which the appendix (27) rests axially against the stop member (23) to prevent the control plate from sliding with respect to the frame in said direction, and a release position, in which the appendix (27) does not engage the stop member (23), thus allowing the control plate to slide with respect to the frame in said direction.

2. A device as claimed in Claim 1, **characterized in that** the retaining member (22) has a substantially L-shaped longitudinal section, the rod (26) is a cylindrical rod, and the appendix (27) is defined by a plate projecting radially from an axial end (28) of the rod and entirely on one side of a central plane of the rod.

3. A device as claimed in Claim 1 or 2,
**characterized in that** the rod (26) is retained axially inside the seat (21) by opposite shoulders (33, 34).

4. A device as claimed in one of Claims 1 to 3, **characterized in that** the stop member (23) comprises a projection (38) projecting perpendicularly from a rear face (39) of the control plate (2).

5. A device as claimed in one of the foregoing Claims, **characterized in that** the retaining member (22) comprises a projection (49), which clicks inside one or the other of two retaining seats (48) when the retaining member (22) assumes the lock position or the release position respectively.

6. A device as claimed in Claim 5, **characterized in that** the projection (49) of the retaining member projects radially from a lateral surface of the rod (26) on the opposite side to the appendix (27), and rotates integrally with the retaining member (22) inside a curved guide (47) substantially coaxial with said seat (21).

7. A device as claimed in one of the foregoing Claims, **characterized in that** the retaining member (22) comprises a manoeuvring hole (42) formed at an axial end (28) of the retaining member (22), extending along said axis (A), and in which is insertable a tool, e.g. an Allen wrench, to manoeuvre the retaining member (22).

8. A device as claimed in Claim 7, **characterized in that** the manoeuvring hole (42) is aligned with an access hole (43) for insertion of the tool and formed through an edge (4) of the control plate (2).

9. A device as claimed in Claim 8, **characterized in that** the access hole (43) is formed through a peripheral collar (6) of an opening (5) in which a control button (8) is housed movably; the button (8) being movable into a rest position, in which the access hole (43) is concealed by the button (8), and a work position, in which the access hole (43) is exposed and accessible.
